# EUROPEAN PATENT SPECIFICATION

(11) **EP 0 714 801 B1**
(45) Date of publication and mention of the grant of the patent: **27.02.2002**
(21) Application number: 95118251.8
(22) Date of filing: 20.11.1995
(51) Int. Cl.: B60K 17/00, F16H 55/52, F16H 55/56

(54) **Belt-drive variable speed transmission**
Stufenloses Riemengetriebe
Engrenage à courroie ayant un réglage continu

(30) Priority: 28.11.1994 JP 29321194
(43) Date of publication of application: 05.06.1996
(73) Proprietor: HONDA GIKEN KOGYO KABUSHIKI KAISHA, Minato-ku Tokyo (JP)
(72) Inventor: Itoh, Kazuhito, c/o K.K. Honda, Wako-shi, Saitama (JP); Ohyama, Takashi, c/o K.K. Honda, Wako-shi, Saitama (JP)
(74) Representative: Liska, Horst, Dr.-Ing.

(56) References cited:
- EP-A- 0 408 074
- US-A- 3 693 771
- US-A- 4 723 619

## Description

The present invention relates to a belt-drive variable-speed transmission comprising a driving pulley mounted on an input shaft, a driven pulley mounted on an output shaft, and an endless belt extended between the driving pulley and the driven pulley, and more particularly to a device according to the characteristics of the preamble of independent claim 1.

Such a system is known for example from EP 0 408 074 A1 and US 4,723,619 A.

Another known system which comprises a V-belt pulley having two axially fixed parts mounted on a shaft is known from US 3,693,771 A.

A further belt-drive variable-speed transmission pertinent to the 'present invention is disclosed in Japanese Patent Laid-open No. Hei 4-279764.

The belt-drive variable--speed transmission disclosed in Lapanese Patent Laid-open No. Hei 4-279764 has a driven pulley having an axially fixed part welded to one end of a sleeve mounted on an output shaft so as to be rotatable relative to the output shaft, and clutch weight pins for pivotally supporting clutch weights included in an automatic centrifugal clutch are supported on a driving plate joined to the other end of the sleeve.

A torque cam mechanism for preventing an endless belt from slipping relative to the driven pulley is disposed radially outside a coil spring for biasing an axially movable part included in the driven pulley toward the axially fixed part.

This prior art belt-drive variable-speed transmission needs the driving plate for supporting the clutch weight pins as additional parts, which increases the manufacturing cost and increases the axial size of the driven pulley to secure a space for installing the driving plate therein. Since the torque cam mechanism is disposed radially outside the coil spring, the radial dimension of the driven pulley of the prior art belt-drive variable-speed transmission needs inevitably be increased.

The present invention has been made in view of the foregoing circumstances and it is therefore an object of the present invention to provide a belt-drive variable-speed transmission provided with a compact driven pulley.

To achieve the object, according to the invention a belt-drive variable-speed transmission comprises: an input shaft; a driving pulley mounted on the input shaft; an output shaft; a driven pulley comprising an axially fixed part and an axially movable part, and mounted on the output shaft; an endless belt extended between the driving pulley and the driven pulley; a coil spring for biasing the axially movable part toward the axially fixed part; and a torque cam mechanism for converting the torque transmitted from the endless belt to the driven pulley into axial thrust to bias the axially movable part toward the axially fixed part. In this belt-drive variable-speed transmission, the torque cam mechanism is disposed radially inside the coil spring.

Since the torque cam mechanism is disposed radially inside the coil spring, the radial dimension of the driven pulley is comparatively small.

The torque cam mechanism is disposed in a space defined by the coil spring. Therefore, the driven pulley can be formed in a comparatively small radial dimension.

Preferably the torque cam mechanism comprises; a cam plate fixed to the boss of the axially fixed part, supporting the axially movable part so as to be rotatable relative thereto and axially movable thereon; support arms radially extended on the cam plate; cam followers mounted radially outside on the support arms, the outer surfaces of the cam followers being in contact with the inner circumference of the coil spring; and a cam formed so as to protrude from the axially movable part and to be in contact with the cam followers.

The axially movable part and the axially fixed part rotate relative to each other if the axially fixed part of the driven pulley slips relative to the endless belt when transmitting a large torque and, consequently, the cam followers in contact with the cam bias the axially movable part toward the axially fixed part to check the slip of the axially fixed part relative to the endless belt. Since the coil spring is disposed around the cam followers, the coil-spring functions as a stop member for restraining the cam followers from coming off.

Thus, the torque cam mechanism comprises the cam plate fixed to the sleeve of the axially fixed part supporting the axially movable part for axial sliding and rotation relative to the axially fixed part, the radial support arms attached on the cam plate, the cam followers put radially inward on the support arms, and cams projecting from the axially movable part so as to be in contact with the cam followers. Since the outer surfaces of the cam followers are in contact with the inner circumference of the coil spring, the cam followers can be easily put on the support arms and the coil spring restrains the cam followers from falling off the support arms.

Preferably the support arms and the cam plate are formed integrally in a unit by punching.

Since the support arms are formed integrally with the cam plate by punching, the number of the component parts and the manufacturing cost are reduced.

Since the support arms are formed integrally with the cam plate by punch working, the number of component parts and the manufacturing cost can be reduced.

Preferably the belt-drive variable-speed transmission further comprises: an automatic centrifugal clutch mounted on the output shaft so as to be adjacent to the driven pulley to transmit the rotation of the driven pulley to the output shaft. In this belt-drive variable-speed transmission, clutch weight pins for pivotally supporting clutch weights included in the automatic centrifugal clutch are supported on the back surface of the axially fixed part of the driven pulley.

In the belt-drive variable-speed transmission the clutch weights pivotally supported respectively on the clutch weight pins supported on the axially fixed part of the driven pulley turn radially outward on the clutch weight pins when the driven pulley is rotated by the endless belt. Consequently, the automatic centrifugal clutch is engaged to transmit the rotation of the driven pulley to the output shaft. Since the clutch weight pins pivotally supporting the clutch weights of the automatic centrifugal clutch are supported on the axially fixed part of the driven pulley, the driving plate employed in the prior art belt-drive variable-speed transmission for supporting the clutch weight pins is unnecessary, so that the number of the component parts is reduced and the axial dimension of the driven pulley is reduced accordingly

The clutch weight pins for pivotally supporting the clutch weights of the automatic centrifugal clutch are supported on the back surface of the axially fixed part of the driven pulley. Therefore, a drive plate which has been used for supporting clutch weight pins in the conventional belt-drive variable-speed transmission is unnecessary and, consequently, the number of component parts is reduced and the axial dimension of the driven pulley can be reduced accordingly.

Preferably the clutch weight pins of the belt-drive variable-speed transmisson are combined with the axially fixed part of the driven pulley by casting.

Since the clutch weight pins are combined with the axially fixed part of the driven pulley by casting, the clutch weight pins can be firmly fixed without using any special fixing members.

The clutch weight pins are combined integrally with the axially fixed part of the driven pulley by insert casting. Therefore, the clutch weight pins can be firmly fixed to the driven pulley without using any special fixing members, so that the number of component parts and the manufacturing cost can be reduced.

Preferably damper supports for supporting damping members for damping the clutch weights are formed integrally with the axially fixed part of the driven pulley.

Since the damper supports for supporting the dampers for damping the clutch weights are formed integrally with the axially fixed part of the driven pulley, the dampers can be supported without using any special supporting members.

The damper support members for supporting the dampers for damping the clutch weights are formed integrally with the axially fixed part of the driven pulley. Therefore, the dampers can be supported without using any special support members, so that the number of component parts and the manufacturing cost can be reduced.

Preferred embodiments of the present invention will be described hereinafter with reference to the accompanying drawings.

Figs. 1 to 11 illustrate a preferred embodiment of the present invention, in which:
Fig. 1 is a general side view of a motorcycle.
Fig. 2 is a side view of a power unit.
Fig. 3 is a sectional view taken on line 3-3 in Fig. 2.
Fig. 4 is a sectional view taken on line 4-4 in Fig. 2.
Fig. 5 is an enlarged view of an essential portion in Fig. 3.
Fig. 6 is a view taken in the direction of the arrow on the line 6-6.
Fig. 7 is a sectional view taken on the line 7-7 in Fig. 5.
Fig. 8 is an enlarged view of an essential portion in Fig. 3.
Fig. 9 is a view taken in the direction of the arrow on the line 9-9.
Fig. 10 is an enlarged sectional view taken on the line 10-10 in Fig. 9.
Fig. 11 is a sectional view taken on the line 11-11 in Fig. 8.

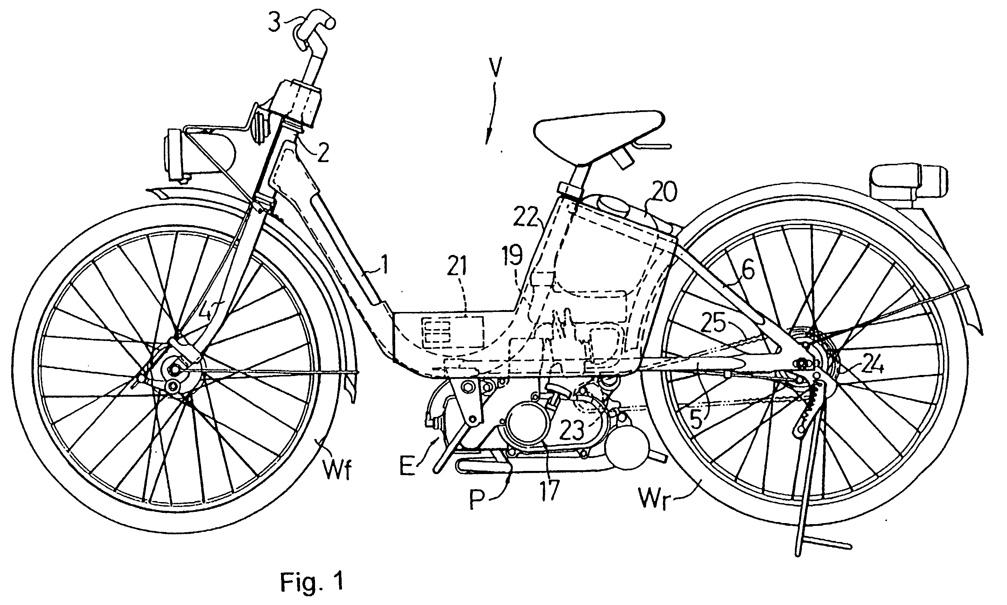

Referring to Fig. 1, a motorcycle V has a main frame 1 having a shape resembling the letter U in a side view. A head pipe 2 attached to the front end of the main frame 1 has an upper end attached to a handlebar 3 and a lower end supporting for steering a front fork supporting a front wheel Wf on an axle at its lower end. The rear end of a lower rear fork 5 extended backward from the lower end of the main frame 1, and the rear end of an upper rear fork 6 extended backward from the rear end of the main frame 1 are joined together, and a rear wheel Wr to be driven by a power unit P is supported on an axle at the joint of the respective rear ends of the lower rear fork 5 and the upper rear fork 6.

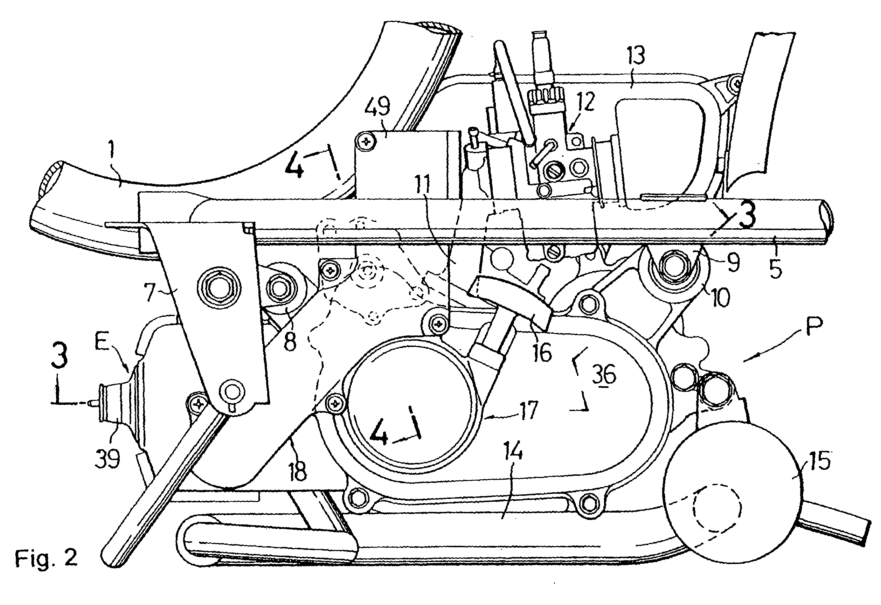

As is apparent from the observation of both Figs. 1 and 2, the power unit P provided with a two-cycle single-cylinder engine E has a front end supported through a rubber bush 8 on a bracket 7 attached to the front portion of the lower rear fork 5, and a rear end supported through a rubber bush 10 on a bracket 9 fixed to the middle portion of the lower rear form 5.

A carburetor 12 is connected to the upper end of an intake pipe 11 extended upward from the upper surface of the power unit P, and an air cleaner 13 is connected to the right side surface of the carburetor 12. An exhaust pipe 14 is extended backward from the lower surface of the power unit P and is connected to a muffler 15 suspended from the rear end of the power unit P. A recoil starter 17 having a starting grip 16, and a cooling air discharge duct 18 are arranged on the left side surface of the power unit P.

An oil tank 19 and a fuel tank 20 are disposed above the rear portion of the power unit P, and a battery 21 is disposed above the front portion of the power unit P. The oil tank 19, the fuel tank 20 and the battery 21 are covered with a cover 22 supported on the main frame 1, the lower rear fork 5 and the upper rear fork 6.

An endless chain 25 is extended between a driving sprocket 23 disposed on the right side surface of the power unit P, and a driven sprocket 24 mounted on the rear axle supporting the rear wheel Wr to transmit the driving force of the power unit P to the rear wheel Wr.

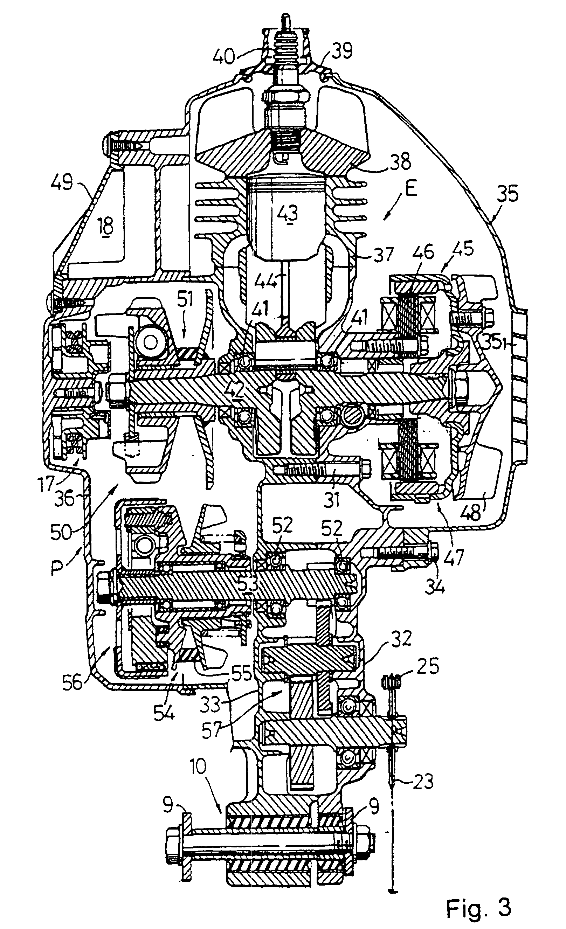

The construction of the power unit P will be described hereinafter with reference to Fig. 3.

The power unit P has a right half case 32 and a left half case 33 joined together with bolts 31. A right cover 35 is fastened to the right side surface of the right half case 32 with bolts 34, and a left cover 36 is fastened to the left side surface of the left half case 33 with bolts, not shown. The respective front portions of the right half case 32 and the left half case 33 form the crankcase of the engine E. A cylinder block 37 is fastened to the front portion of the crankcase and a cylinder head 38 is joined to the cylinder block 37. The cylinder block 37 and the cylinder head 38 are covered with the right cover 35 and the left cover 36. The tip of a spark plug 40 is exposed in a cap 39 held between the front portions of the mating surfaces of the right cover 35 and the left cover 36.

A crankshaft 42 is supported in a pair of ball bearings 41 on the right half case 32 and the left half case 33, a piston 43 is slidably fitted in a cylinder bore formed in the cylinder block 37, and a connecting rod 44 connects the piston 43 to the crankshaft 42. A generator 45 disposed in a space around the right end of the crankshaft 42 comprises a stator 46 supported on the right half case 32, and a rotor 47 supported on the crankshaft 42. A cooling fan 48 for taking cooling air through a cooling air inlet 35₁ formed in the right cover 35 into a space covered with the right cover 35 is attached to the right end surface of the rotor 47. A duct cover 49 forming the cooling air discharge duct 18 in combination with the left cover 36 is fastened to the outer surface of the left cover 36.

The left half case 33 and the left cover 36 form a transmission case, and a belt-drive variable-speed transmission 50 is contained in the transmission case. The belt-drive variable-speed transmission 50 comprises an input shaft, i.e., a left portion of the crankshaft 42, a driving pulley 51 mounted on the input shaft, an output shaft 53 supported in a pair of ball bearings 52 on the right half case 32 and the left half case 33, a driven pulley 54 mounted on a left end of the output shaft 53, and an endless belt 55 extended between the driving pulley 51 and the driven pulley 54.

The recoil starter 17 is placed on the inner surface of the left cover 36 opposite to the left end of the crankshaft 42, and an automatic centrifugal clutch 56 for transmitting the rotation of the driven pulley 54 to the output shaft 53 is mounted on the left end of the output shaft 53. A reduction gear train 57 is disposed in the rear portion of a space defined by the right half case 32 and the left half case 33. The reduction gear train 57 reduces the input speed, i.e., the rotating speed of the output shaft 53, to a lower speed and transmits the lower speed to the driving sprocket 23.

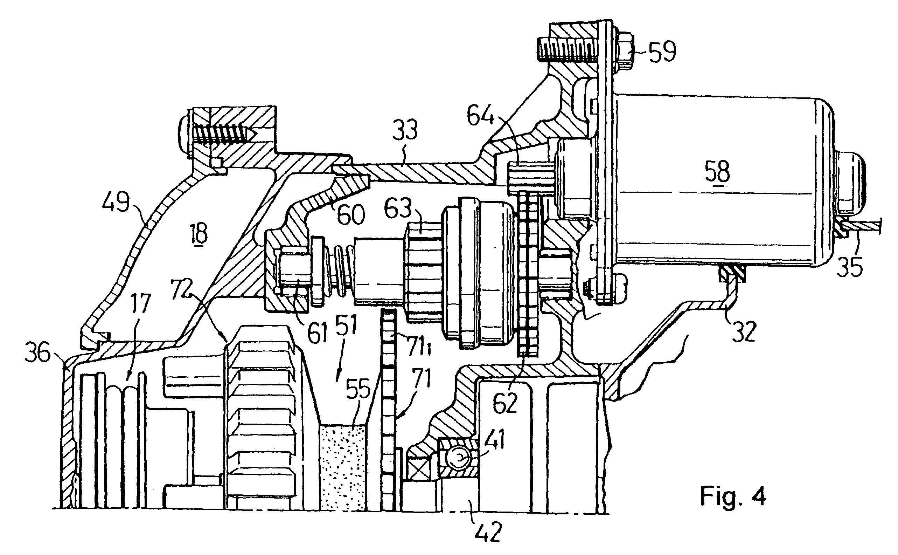

As best shown in Fig. 4, a starting motor 58 is fastened to the end surface of the left half case 33 with bolts 59. A starting shaft 61 is supported on the left half case 33 and a bearing bracket 60, and a driven gear 62 and a plunging pinion 63 are mounted on the starting shaft 61. A driving pinion 64 mounted on the output shaft of the starting motor 58 is in engagement with the driven gear 62, and the plunging pinion 63 is brought into engagement with a starting gear 71₁ formed in the outer circumference of the axially fixed part 71 of the driving pulley 51 for engine starting operation. When the starting motor 58 is driven, the starting shaft 61 is rotated through the driving pinion 64 and the driven gear 62, the pinion 63 is shifted to the left, as viewed in Fig. 4, so as to engage with the starting gear 71₁ to rotate the driving pulley 51 and, consequently, the crankshaft 42 is rotated to start the engine E.

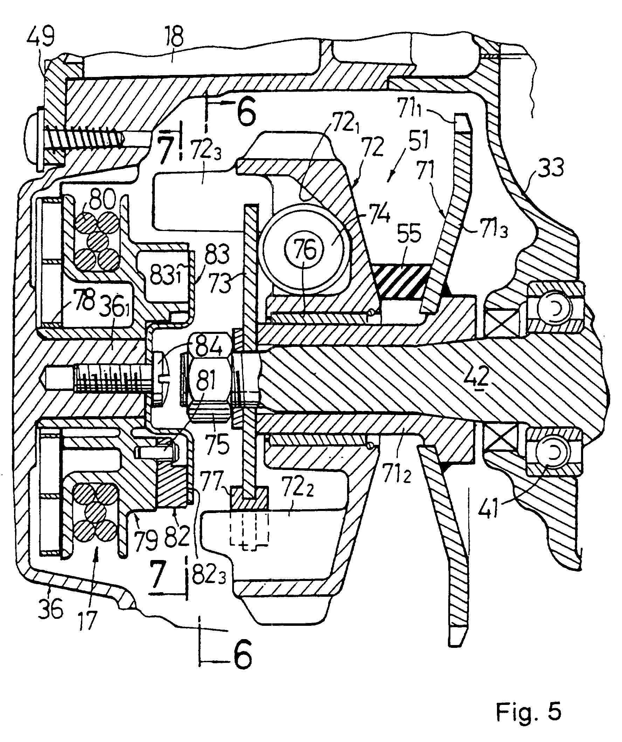

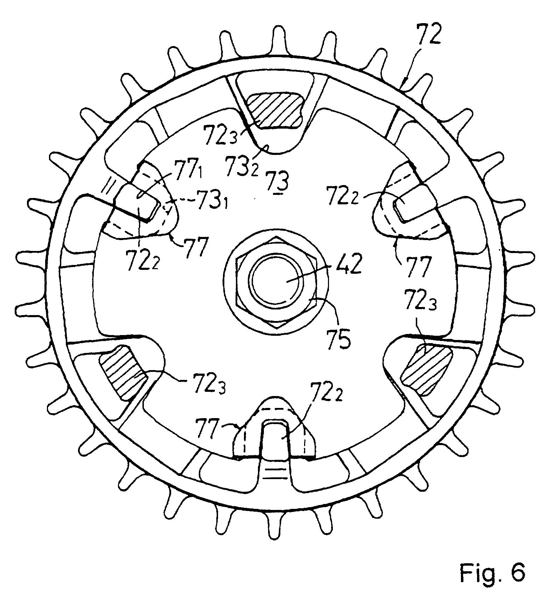

The respective constructions of the driving pulley 51 and the recoil starter 17 will be described in detail with reference to Figs. 5 to 7.

The driving pulley 51 mounted on the left end of the crankshaft 42 comprises the axially fixed part 71, an axially movable part 72, a ramp plate 73, and weight rollers 74. The axially fixed part 71 is formed by welding a face plate 71₃ formed by press working to the right end of a sleeve 71₂ fitted on the crankshaft 42 and fastened in place together with the ramp plate 73 with a nut 75. The starting gear 71₁ is formed in the outer circumference of the face plate 71₃. A die-cast axially movable part 72 is put on a self-lubricating bearing 76 fitted on the sleeve 71₂ of the axially fixed part: 71 so as to be axially slidable. The axially movable part 72 has cam surfaces 72₁ for guiding the weight rollers 74, facing the right side surface of the ramp plate 73. The weight rollers 74 are held between the cam surfaces 72₁ and the ramp plate 73.

Three sliders 77 formed of a self-lubricating material are supported on the outer circumference of the ramp plate 73 at an angular interval of 120 degree to allow the axial sliding movement of the axially movable part 72 relative to the axially fixed part 71 and to restrain the axially movable part 72 from rotation relative to the axially fixed part 71. The sliders 77 are fitted in U-shaped recesses 73₁ formed in the outer circumference of the ramp plate 73, respectively. Guide ribs 72₂ formed on the axially movable part 72 so as to protrude from the left side surface of the axially movable part 72 are received slidably in the grooves 77₁ of the sliders 77, respectively.

The axially movable part 72 is provided with three arms 72₃ formed between the three guide ribs 72₂ so as to protrude to the left from the peripheral portion thereof. The arms 72₃ project through three recesses 73₂ toward the recoil starter 17.

The recoil starter 17 has a starting pulley 79 rotatably mounted on a boss 36₁ projecting from the inner surface of the left cover 36, and a return coil spring 78 having one end connected to the left cover 36 and the other end connected to the starting pulley 79. The starting grip 16 (Fig. 2) is attached to the free end of a rope 80 wound around the starting pulley 79.

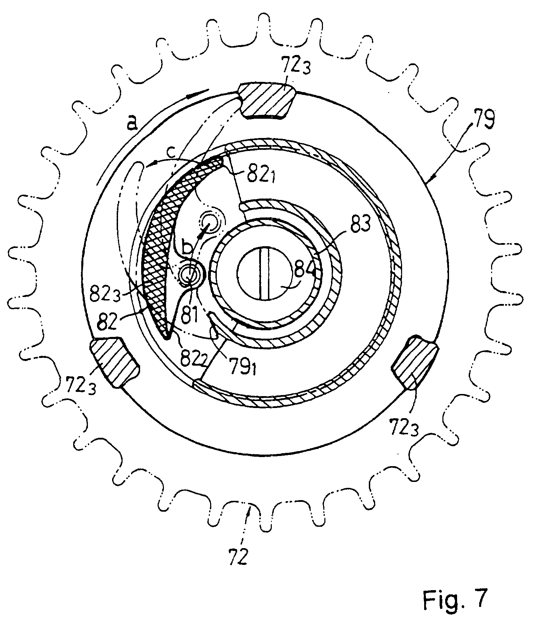

A pawl 82 pivotally supported on the side surface of the starting pulley 79 by a pin 81 has a nose 82₁ capable of coming into engagement with the arm 72₃ of the axially movable part 72, and a tail 82₂ formed in the base end thereof and capable of coming into engagement with a stopping part 79₁ formed in the starting pulley 79. An enlarged tip portion of the pawl 82 around the nose 82₁ is thicker than a portion of the pawl 82 around the pin 81, and the right side surface, i.e., a shaded area in Fig. 7, of the enlarged tip portion serves as a friction surface 82₃. A friction plate 83 is fastened to the free end of the boss 36₁ with a bolt 84, and the friction surface 83₁ of the friction plate 83 is in sliding contact with the friction surface 82₃ of the pawl 82.

When the starting pulley 79 is rotated in the direction of the arrow a in Fig. 7 by pulling the starting grip 16, the pawl 82 turns in the direction of the arrow b together with the starting pulley 79, and the friction surface 82₃ of the pawl 82 slides along the friction surface 83₁ of the friction plate 83. Then, since the friction surface 82₃ of the pawl 82 extends radially outside the pin 81, the pawl 82 is pulled by the friction plate 83 to turn in the direction of the arrow c on the pin 81 until the tail 82₂ comes into contact with the stopping part 79₁ of the starting pulley 79 as indicated by alternate long and two short dashes lines in Fig. 7.

In this state, the nose 82₁ of the pawl 82 protrude radially outward and engages with one of the arms 72₃ of the axially movable part 72 and pushes the driving pulley 51 for turning. Consequently, the driving pulley 51 is rotated and the engine E is started. After the engine E has been started, the arm 72₃ of the axially movable part 72 pushes the pawl 82 at the nose 82₁ to turn the pawl 82 to its original position, so that the recoil starter 17 is disconnected from the driving pulley 51 and the engine E is able to operate without hindrance.

Since the arms 72₃, which one of which the pawl 82 of the recoil starter 17 comes into engagement, are formed integrally with the axially movable part 72 of the driving pulley 51, the ramp plate 73 need not be provided with any parts corresponding to the arms 72₃. Therefore, the ramp plate 73 has a simple shape and may be an inexpensive part formed by press working. Since the arms 72₃ protrude from the cam surfaces 72₁ inclined toward the coil starter 17, respectively, the arms 72₃ may have the least necessary height from the cam surfaces 72₁. Therefore, the arms 72₃ do not need any special reinforcement and has a sufficient strength to withstand the load exerted thereon by the pawl 82 of the recoil starter 17. Since the axially movable part 72 of the driving pulley is formed by die casting, the arms 72₃ can be easily formed integrally with the axially movable part 72.

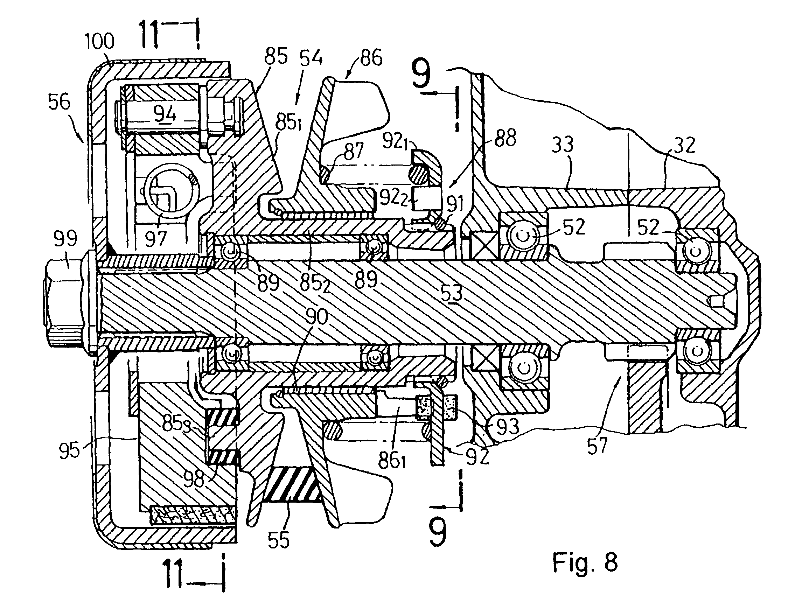

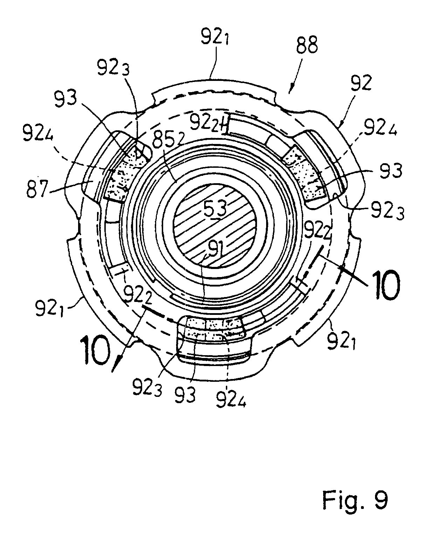

The construction of the driven pulley 54 will be described hereinafter with reference to Figs. 8 to 10.

The driven pulley is mounted on the left end of the output shaft 53, and comprises a die-cast axially fixed part 85, a die-cast axially movable part 86, a coil spring 87, and a torque cam mechanism 88. The axially fixed part 85 has a working surface 85₁ and is provided integrally with a sleeve 85₂. The sleeve 85₂ of the axially fixed part 85 is put on a pair of ball bearings 89 mounted on the output shaft 53 so that the axially fixed part 85 is rotatable relative to the output shaft 53. The axially movable part 86 is supported on a self-lubricating bearing 90 fitted on the sleeve 85₂ of the axially fixed part 85 so as to be axially slidable and rotatable relative to the sleeve 85₂.

The torque cam mechanism 88 has a cam plate 92 in spline engagement with the right end of the sleeve 85₂ of the axially fixed part 85 and restrained from falling off the sleeve 85₂ with a snap ring 91. The coil spring 87 is compressed between the cam plate 92 and the axially movable part 86 to bias the axially movable part 86 to the left, i.e., toward the axially fixed part 85. The right end of the coil spring 87 is positioned by lugs 92₂ formed by bending portions of the periphery of the cam plate 92, and lugs 92₂ formed by raising portions of the cam plate 92.

The cam plate 92 is provided with three substantially L-shaped openings 92₃ arranged at an angular interval of 120 degree, and support arms 92₄ projecting radially outward from the inner edges of the openings 92₃, respectively. The length of the support arms 92₄ is about half the maximum radial width of the openings 92₃. Cam followers 93 formed of a self-lubricating material are put on the radially outer ends of the support arms 92₄, respectively. Three cams 86₁ formed integrally with the axially movable part 86 are in contact with the cam followers 93 in the openings 92₃, respectively.

The torque cam mechanism 88 is surrounded by the coil spring 87, and the radially outer ends of the cam followers 93 are pressed against the inner circumference of the coil spring 87. Thus the cam followers 93 are restrained from falling off the support arms 92₄ without using any special holding members. The cam plate 92 integrally having the lugs 92₁ and 92₂, the openings 92₃ and the support arms 92₄ can be formed by punch working and press working at a low manufacturing cost.

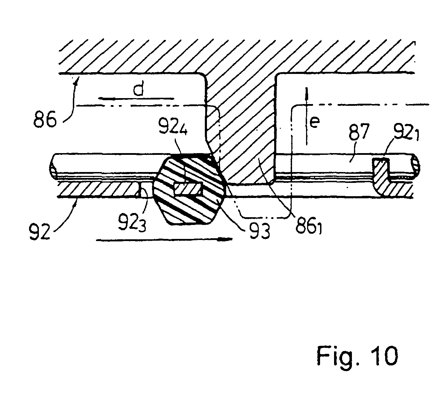

When the engine E is accelerated sharply in starting the motorcycle V or in climbing up a hill, the rotation of the crankshaft 42 is transmitted from the driving pulley 51 of the belt-drive variable-speed transmission 50 through the endless belt 55 to the driven pulley 52. Since the driving force of the endless belt 55 is transmitted first to the relatively lightly loaded axially movable part 86 of the driven pulley 52, the axially movable part 86 is turned in the direction of-the arrow d shown in Fig. 10 relative to the cam plate 92 in spline engagement with the sleeve 85₂ of the axially fixed part 85. Consequently, the cams 86₁ of the axially movable part 86 are pressed against the cam followers 93 supported on the cam plate 92, and the axially movable part 86 is urged by reaction force toward the axially fixed part 85 as indicated by the arrow e in Fig. 10. Consequently, the endless belt 55 is compressed firmly between the axially fixed part 85 and the axially movable part 86 to prevent the endless belt 55 from slipping relative to the driven pulley 51, so that the power can be smoothly transmitted to the driven pulley 51 when starting the motorcycle V or when climbing up a hill, in which an increased load acts on the belt-drive variable-speed transmission 50.

Since the torque cam mechanism 88 is disposed in a space defined by the coil spring 87 for biasing the axially movable part 86 toward the axially fixed part 85, the torque cam mechanism 88 can be formed in a comparatively small radial dimension, which contributes to forming the driven pulley 54 in a compact construction.

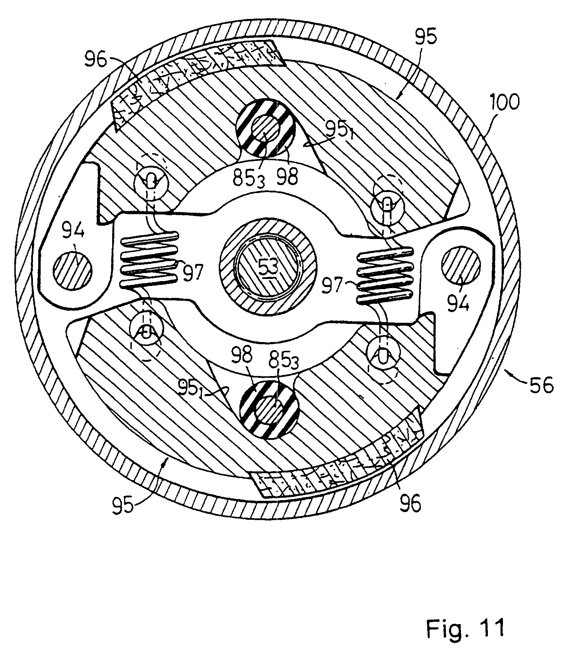

The construction of the automatic centrifugal clutch 56 will be described hereinafter with reference to Figs. 8 and 11.

The automatic centrifugal clutch 56 comprises two clutch weight pins 94 integrally combined with the axially fixed part 85 of the driven pulley by insert casting so as to project from the back surface of the axially fixed part 85 opposite the working surface 85₁ of the same, a pair of clutch weights 95 each having one end pivotally supported on the clutch weight pin 94, clutch facings 96 attached to the outer surfaces of the clutch weights 95, respectively, two clutch springs 97 extended between the pair of clutch weights 95, rubber dampers 98 put on pins 85₃ formed integrally with the axially fixed part 85 and projecting from the back surface of the axially fixed part 85, and a clutch drum 100 splined to the left end of the output shaft 53 and fastened to the output shaft 53 with a nut 99.

Since the clutch weight pins 94 are combined with the axially fixed part 85 of the driven pulley 54 by insert casting, the clutch weight pins 94 can be firmly fixed without using any special fixing members, and a drive plate, which has been necessary for supporting the clutch weight pins 94 in the conventional automatic centrifugal clutch, is unnecessary and hence the number of component parts is reduced and the axial dimension of the driven pulley 54 can be reduced accordingly.

When the automatic centrifugal clutch 56 is disengaged, the clutch weights 95 are pulled toward each other by the clutch springs 97, the clutch weights 95 are held with the bottom surfaces of recesses 95₁ formed in the clutch weights 95 resting on the rubber dampers 98, and the clutch facings 96 are separated from the inner circumference of the clutch drum 100.

Centrifugal force acting on the clutch weights 95 increases as the rotating speed of the driven pulley 54 increases, the clutch weights 95 are caused to turn radially outward on the clutch weight pins 94 against the resiliences of the clutch springs 97 and the rotation of the driven pulley 54 is transmitted to the output shaft 53 after the clutch facings 96 have engaged with the inner circumference of the clutch drum 100. Consequently, the rotation of the crankshaft 42 of the engine E is transmitted through the driving pulley 51, the endless belt 55, the driven pulley 54, the automatic centrifugal clutch 56, the output shaft 53, the reduction gear train 57, the driving sprocket 23, the endless chain 25 and the driven sprocket 24 to the rear wheel Wr.

When the engine E is further accelerated, the weight rollers 74 of the driving pulley 51 of the belt-drive variable-speed transmission 50 are caused to move radially outward by centrifugal force, and the reaction force of the ramp plate 73 moves the axially movable part 72 toward the axially fixed part 71. Consequently, the width of the V-shaped space between the parts 71 and 72 decreases, whereby the endless belt 55 is forced to move radially outward on the driving pulley 51. At the same time, the axially movable part 86 of the driven pulley 54 is forced to move to the right, i.e., away from the axially fixed part 85, by the endless belt 55 against the resilience of the coil spring 87, whereby the width of a V-shaped space between the parts 85 and 86 is increased and the endless belt 55 moves radially inward on the driven pulley 54. Thus, the belt-drive variable-speed transmission varies its reduction ratio continuously so that the reduction ratio is increased when the engine speed of the engine E is in a low engine speed range, and the reduction ratio is decreased when the engine speed is in a high engine speed range.

Although the preferred embodiment of the present invention has been described, the present invention is not limited thereto and many changes and variations are possible therein without departing from the scope of the invention.

Although the present invention has been described as applied to a belt-drive variable-speed transmission for the motorcycle V, the present invention is applicable to belt-drive variable-speed transmissions for motor tricycles and four-wheel cars.

Summarized, the present invention provides a belt-drive variable-speed transmission of a compact construction.

A driven pulley (54) mounted on an output shaft (53) to transmit the driving force of an endless belt (55) through an automatic centrifugal clutch (56) to the output shaft (53) comprises an axially fixed part (85), an axially movable pulley pat (86), a coil spring (87) biasing the axially movable part (86) toward the axially fixed part (85), and a torque cam mechanism (88) for preventing the slip of the endless belt (55) relative to the driven pulley (54). The torque cam mechanism (88) is disposed in a space defined by the coil spring (87), clutch weight pins (94) pivotally supporting the clutch weights (95) of the automatic centrifugal clutch (56) are supported on the back surface of the axially fixed part (85) of the driven pulley (54).

## Claims

1. A belt drive variable-speed transmission comprising: an input shaft (42); a driving pulley (51) mounted on the input shaft (42); an output shaft (53); a driven pulley (54) comprising an axially fixed part (85) and an axially movable part (86), and mounted on the output shaft (54); an endless belt (55) extended between the driving pulley (51) and the driven pulley (54); a coil spring (87) for biasing the axially movable part (86) toward the axially fixed part (85); and a torque cam mechanism (88) for converting the torque transmitted from the endless belt (55) to the driven pulley (54) into axial thrust to bias the axially movable part (86) toward the axially fixed part (85);
**characterized in that** the torque cam mechanism (88) is disposed radially inside the coil spring (87).

2. A belt-drive variable-speed transmission according to claim 1, wherein the torque cam mechanism (88) comprises: a cam plate (92) fixed to the sleeve (85₂) of the axially fixed part (85), supporting the axially movable part (86) so as to be rotatable relative thereto and axially movable thereon; support arms (92₄) radially extended on the cam plate (92); cam followers (93) mounted at radially outer positions on the support arms (92₄), the outer surfaces of the cam followers (93) being in contact with the inner circumference of the coil spring (87); and a cam (86₁) formed so as to protrude from the axially movable part (86) and to be in contact with the cam followers (93).

3. A belt-drive variable-speed transmission according to claim 1 or 2, wherein the support arms (92₄) and the cam plate (92) are formed integrally in a unit by punching.

4. A belt-drive variable-speed transmission according to claim 1, further comprising an automatic centrifugal clutch (56) mounted on the output shaft (53) so as to be adjacent to the driven pulley (54) to transmit the rotation of the driven pulley (54) to the output shaft (52);
wherein clutch weight pins (94) for pivotally supporting clutch weights (95) included in the automatic centrifugal clutch (56) are supported on a back surface of an axially fixed part (85) of the driven pulley (54).

5. A belt-drive variable-speed transmission according to claim 4, wherein the clutch weight pins (94) are combined with the axially fixed part (85) of the driven pulley (54) by casting.

6. A belt-drive variable-speed transmission according to claim 4 or 5, wherein damper supports (85₃) for supporting damping members (98) for damping the clutch weights (95) are formed integrally with the axially fixed part (85) of the driven pulley (54).

## Patentansprüche

1. Stufenlos verstellbares Riemengetriebe, umfassend: eine Eingangswelle (42); eine Antriebsriemenscheibe (51), die an der Eingangswelle (42) angebracht ist; eine Ausgangswelle (53); eine Abtriebsriemenscheibe (54), die ein axial festgelegtes Teil (85) und ein axial bewegliches Teil (86) umfasst und an der Ausgangswelle (54) angebracht ist; einen endlosen Riemen (55), der sich zwischen der Antriebsriemenscheibe (51) und der Abtriebsriemenscheibe (54) erstreckt; eine Schraubenfeder (87) zum Vorspannen des axial beweglichen Teils (86) auf das axial festgelegte Teil (85) zu; und einen Drehmomentnockenmechanismus (88) zum Umwandeln des von dem endlosen Riemen (55) auf die Abtriebsriemenscheibe (54) übertragenen Drehmoments in einen axialen Schub, um das axial bewegliche Teil (86) auf das axial festgelegte Teil (85) zu vorzuspannen;
**dadurch gekennzeichnet, dass** der Drehmomentnockenmechanismus (88) radial innerhalb der Schraubenfeder (87) angeordnet ist.

2. Stufenlos verstellbares Riemengetriebe gemäß Anspruch 1, wobei der Drehmomentnockenmechanismus (88) umfasst: eine Nockenplatte (92), die an der Hülse (85₂) des axial festgelegten Teils (85) befestigt ist, welche das axial bewegliche Teil (86) so lagert, dass es relativ dazu beweglich ist und axial darauf beweglich ist; Tragarme (92₄), die sich auf der Nockenplatte (92) radial erstrecken; Nockenfolger (93), die an radial äußeren Positionen an den Tragarmen (92₄) angebracht sind, wobei die Außenflächen der Nockenfolger (93) in Kontakt mit dem Innenumfang der Schraubenfeder (87) sind; und einen Nocken (86₁), der so ausgebildet ist, dass er von dem axial beweglichen Teil (86) vorsteht und in Kontakt mit den Nockenfolgern (93) ist.

3. Stufenlos verstellbares Riemengetriebe gemäß Anspruch 1 oder 2, wobei die Tragarme (92₄) und die Nockenplatte (92) integral in einer Einheit durch Stanzen ausgebildet sind.

4. Stufenlos verstellbares Riemengetriebe gemäß Anspruch 1, ferner umfassend eine automatische Fliehkraftkupplung (56), die an der Ausgangswelle (53) so angebracht ist, dass sie benachbart der Abtriebsriemenscheibe (54) ist, um die Drehung der Abtriebsriemenscheibe (54) auf die Ausgangswelle (52) zu übertragen; wobei Kupplungsgewichtsstifte (94) zum schwenkbaren Lagern von in der automatischen Fliehkraftkupplung (56) enthaltenen Kupplungsgewichten (95) an einer Rückfläche eines axial festgelegten Teils (85) der Abtriebsriemenscheibe (54) getragen sind.

5. Stufenlos verstellbares Riemengetriebe gemäß Anspruch 4, wobei die Kupplungsgewichtsstifte (94) mit dem axial festgelegten Teil (85) der Abtriebsriemenscheibe (54) durch Gießen verbunden sind.

6. Stufenlos verstellbares Riemengetriebe gemäß Anspruch 4 oder 5, wobei Dämpferlager (85₃) zum Lagern von Dämpferelementen (98) zum Dämpfen der Kupplungsgewichte (95) integral mit dem axial festgelegten Teil (85) der Abtriebsriemenscheibe (54) ausgebildet sind.

## Revendications

1. Engrenage à courroie ayant un réglage continu comprenant : un arbre primaire (42) ; une poulie d'entraînement (51) montée sur l'arbre primaire (42) ; un arbre mené (53) ; une poulie attaquée (54) comprenant une partie fixe axialement (85) et une partie mobile axialement (86), et montée sur l'arbre mené (53) ; une courroie sans fin (55) étendue entre la poulie d'entraînement (51) et la poulie attaquée (54) ; un ressort à boudin (87) pour solliciter la partie mobile axialement (86) vers la partie fixe axialement (85) ; et un mécanisme à came de torsion (88) pour convertir le couple de torsion transmis de la courroie sans fin (55) à la poulie attaquée (54) en une poussée axiale pour solliciter la partie mobile axialement (86) vers la partie fixe axialement (85) ;
**caractérisé en ce que** le mécanisme à came de torsion (88) est disposé radialement à l'intérieur du ressort à boudin (87).

2. Engrenage à courroie ayant un réglage continu selon la revendication 1, dans lequel le mécanisme à came de torsion (88) comprend : une plaque formant came (92) fixée au manchon (85₂) de la partie fixe axialement (85), supportant la partie mobile axialement (86) de manière à pouvoir tourner par rapport à celle-ci et mobile axialement sur celle-ci ; des bras de support (92₄) étendus radialement sur la plaque formant came (92) ; des contre-cames (93) montées sur des positions radialement externes sur les bras de support (92₄), les surfaces externes des contre-cames (93) étant en contact avec la circonférence interne du ressort à boudin (87) ; et une came (86₁) formée de manière à faire saillie de la partie mobile axialement (86) et à être en contact avec les contre-cames (93).

3. Engrenage à courroie ayant un réglage continu selon la revendication 1 ou 2, dans lequel les bras de support (92₄) et la plaque formant came (92) sont formés d'une seule pièce en une unité par découpage.

4. Engrenage à courroie ayant un réglage continu selon la revendication 1, comprenant en outre un embrayage centrifuge automatique (56) monté sur l'arbre mené (53) de manière à être adjacent à la poulie attaquée (54) pour transmettre la rotation de la poulie attaquée (54) à l'arbre mené (53) ;
dans lequel des broches des masselottes d'embrayage (94) destinées à supporter de façon pivotante les masselottes d'embrayage (95) incluses dans l'embrayage centrifuge automatique (56) sont supportées sur une surface arrière d'une partie fixe axialement (85) de la poulie attaquée (54).

5. Engrenage à courroie ayant un réglage continu selon la revendication 4, dans lequel les broches des masselottes d'embrayage (94) sont combinées à la partie fixe axialement (85) de la poulie attaquée (54) par moulage.

6. Engrenage à courroie ayant un réglage continu selon la revendication 4 ou 5, dans lequel des supports amortisseurs (85₃) destinés à supporter des éléments amortisseurs (98) pour amortir les masselottes d'embrayage (95) sont formés d'une seule pièce avec la partie fixe axialement (85) de la poulie attaquée (54).
